# EUROPEAN PATENT SPECIFICATION

(11) **EP 0 665 785 B1**
(45) Date of publication and mention of the grant of the patent: **03.02.1999**
(21) Application number: 92915682.6
(22) Date of filing: 23.07.1992
(51) Int. Cl.: B32B 31/30, B65D 65/38, B65D 65/40, B32B 27/10

(54) **LAMINATING METHOD**
LAMINIERVERFAHREN
PROCEDE DE LAMINAGE

(30) Priority: 26.07.1991 GB 9116503
(43) Date of publication of application: 09.08.1995
(60) Divisional application: 98108777.8
(73) Proprietor: ELOPAK SYSTEMS AG, 8152 Glattbrugg (CH)
(72) Inventor: FLOM, Atle, CH-8808 Pfäffikon (CH)
(74) Representative: Burrows, Anthony Gregory
(86) International application number: GB9201360
(87) International publication number: WO9302862

(56) References cited:
- EP-A- 0 014 664
- EP-A- 0 293 098
- EP-A- 0 381 922
- GB-A- 1 518 302
- US-A- 4 391 863
- US-A- 4 701 360
- US-E- 31 137
- WORLD PATENTS INDEX LATEST Derwent Publications Ltd, London, GB AN 82-09016E Ä05Ü, DW8205

## Description

### TECHNICAL FIELD

This invention relates to a laminating method.

### BACKGROUND ART

US-E-31137 discloses a laminating method in which there are assembled together and heat cured an outer layer consisting of biaxially oriented polyester on a polyamide (PA) and serving as a layer protecting against physical damage, a polyester urethane adhesive layer, an aluminium foil layer and a primer layer formed from a suspension or dispersion of a polymer in a liquid. This prefabricated web is supplied over one of two rolls to the nip between the rolls, at least one of which is temperature-controlled. A sealant layer containing polypropylene (PP) and possibly either polyethylene (PE) or ethylene vinyl acetate co-2polymer (EVA) is supplied to the nip over the other of the rolls. Extruded to between the web and the sealant layer is a molten sheet of PP or PP/PE blend, which serves to attach the web and the sealant layer to each other.

US-A-4701360 discloses a laminating method in which a layer of LDPE is extrusion coated onto a paperboard layer, the exposed surface of the LDPE layer is corona-discharge or flame treated, the web so formed is flipped over, another layer of LDPE is extrusion coated onto the exposed surface of the paperboard layer, the exposed surface of this other layer of LDPE is corona-discharge or flame treated, and a layer of EVOH is extrusion coated onto the latter exposed surface.

GB-A-1518302 discloses a laminate consisting of an outermost LDPE layer, a paperboard layer, a bonding layer of LDPE, a PA layer, and an innermost LDPE layer. Alternatively, between the paperboard layer and the innermost LDPE layer may be present a "SURLYN" (Trade Mark) adhesive layer, the PA layer, another "SURLYN" (Trade Mark) adhesive layer and aluminium foil.

EP-A-0293098 discloses a laminating method in which a paperboard layer is flame treated on both sides, an outermost LDPE layer is extrusion coated onto the paperboard layer, the exposed LDPE surface is corona-discharge or flame treated, the web thus formed is flipped over, a tie/EVOH/tie layer is co-extruded onto the exposed paperboard surface, and an innermost LDPE layer is extrusion coated onto the exposed surface of the tie/EVOH/tie layer. In a modified version of the method, after flipping-over of the web, a tie/EVOH layer is co-extruded onto the exposed paperboard surface, with the tie in contact with the paperboard, the exposed surface of the EVOH is corona-discharge or flame treated, and then the innermost LDPE layer is extrusion coated onto the EVOH. In a second modified version, after flipping over of the web, an EVOH layer is extrusion coated onto the exposed paperboard surface, the exposed surface of the EVOH layer is corona-discharge or flame treated and then the innermost LDPE layer is extrusion coated onto the EVOH layer.

EP-A-0381922 discloses a laminating method in which a prefabricated laminated web consisting of a paper or cardboard layer and a liquid-tight outermost PE layer are fed over one of two rolls to the nip between the two rolls. A second prefabricated web consisting of a liquid-tight innermost PE layer, a tie layer, and a barrier layer in the form of a mixture of EVOH and amorphous PA, is fed past a first extruding station at which a tie layer is extrusion coated onto the exposed surface of the barrier layer and a second extruding station at which a thermoplastics layer, for example of PE, is applied and thence immediately fed over the other of the two rolls to the nip.

### DISCLOSURE OF INVENTION

According to one aspect of the present invention, there is provided a laminating method carried out upon a conventional laminating line usable for aluminum foil, said method comprising extrusion laminating (i) a web comprised of a relatively stiff substrate and a first moisture barrier layer at one side of said substrate, (ii) a thermoplastics layer and (iii) a prefabricated film used in place of said aluminum foil and comprised of a gas-barrier polymer layer, by applying said thermoplastics layer in a molten state to between said film and that side of said substrate further from said first moisture barrier layer, wherein said extrusion laminating is followed by applying a second moisture barrier layer to that side of the film further from said substrate.

In accordance with this aspect of the invention, an aluminium foil layer in a conventional laminating line is replaced by a film comprised of barrier polymer, without there being any need to modify the conventional equipment of the line. Such film has the advantage that it is more ductile than aluminium foil, thus making production of the laminate more reliable and, if the laminate is to be used for packaging cartons, making the intermediate barrier layer less liable to be damaged, particularly fractured, during scoring, folding and sealing to form the packaging cartons.

Advantageously, the laminating method comprises the steps of:
(a) applying a moisture barrier layer to the outside of a relatively stiff substrate to form a preliminary laminate,
(b) extrusion (including co-extrusion) laminating said preliminary laminate, a thermoplastics layer and a film comprised of a polymer layer, by applying said thermoplastics layer in a molten state to between the inside of said preliminary laminate and said film, and
(c) applying a second moisture barrier layer to the inside of said film.

The laminate would then comprise, progressing from the outside to the inside of said laminate:
(a) an outer moisture barrier layer,
(b) a relatively stiff substrate,
(c) a thermoplastics layer,
(d) a film comprised of a barrier polymer layer, and
(e) an inner moisture barrier layer.

The film may consist of one or more layers. In a first preferred version it consists of an outer tie layer and an inner barrier polymer layer. In a second preferred version, it consists of inner and outer tie layers and an intermediate barrier polymer layer. The barrier polymer layer may comprise one or more of EVOH (ethylene vinyl alcohol co-polymer); PA (polyamide); PA co-polymer; "CELLOPHANE" (Trade Mark); PVOH (polyvinyl alcohol); PAN (polyacrylonitrile); filled polymer; and surface-coated polymer, for example M-PET (metallized polyethylene terephthalate), G-PET (glass-coated PET), M-OPP (metallised oriented polypropylene) and G-OPP (glass-coated OPP). If desired, the film may consist solely of a barrier polymer layer and the or each tie layer be extrusion (including co-extrusion) laminated.

In the first preferred version, the method of manufacture on a conventional laminating line may be as follows. A paperboard substrate of any desired conventional thickness is flame treated on both sides and then LDPE (low density polyethylene) is extrusion-coated, to any desired conventional thickness, onto the outside of the paperboard layer. The preliminary laminate thus obtained is flipped over and led to a nip between two rolls to which is also led a film consisting of an inner layer of oriented EVOH and an outer tie layer of modified LDPE. A molten web of LDPE is delivered from an extruder to between the preliminary laminate and the film, whereby these three items are extrusion laminated. Then the inside surface of the EVOH layer is co-extrusion-coated with a tie layer of modified LDPE and an innermost layer of LDPE.

The packaging laminate thus produced comprises, progressing from the outside towards the inside:-
(a) a moisture barrier layer (LDPE, 14g/m²)
(b) a stiffening substrate (paperboard)
(c) an intermediate thermoplastics layer (LDPE, 10g/m²-25g/m²)
(d) a tie layer (modified LDPE, 3 microns)
(e) a barrier polymer layer (oriented EVOH, 6 microns)
(f) a tie layer (modified LDPE, 6g/m²)
(g) a moisture barrier layer (LDPE, 10g/m²-50g/m²)

In the second preferred version, the method of manufacture may be as given above for the first preferred version, except that the film led to the nip consists of inner and outer tie layers of modified LDPE with an intermediate layer of oriented EVOH and that the innermost layer of LDPE is extrusion-coated onto the inner tie layer.

The packaging laminate thus produced comprises, progressing from the outside towards the inside:-
(a) a moisture barrier layer (LDPE, 14g/m²)
(b) a stiffening substrate (paperboard)
(c) an intermediate thermoplastics layer (LDPE 10g/m²-25g/m², for example 15g/m²)
(d) a tie layer (modified LDPE, 3 microns)
(e) a barrier polymer layer (oriented EVOH, 6 microns)
(f) a tie layer (modified LDPE, 3 microns)
(g) a moisture barrier layer (LDPE, 10g/m²-50g/m², for example 35 or 50g/m²).

Advantageously, the gas barrier film, in its condition laminated to the web, is relatively less contracting if heated than a corresponding extrudate of the same composition as the film. Owing to this feature, whereby a gas barrier layer is in the form of a film rather than having been extrusion-coated onto the substrate, the gas barrier layer has a greater mechanical strength than a corresponding extrusion-coated gas barrier layer and thus has a higher resistance to stress cracking and heat-activated pinholing in subsequent converting and sealing operations.

In a preferred embodiment, a stable, oriented, gas barrier film (for example a bi-axially oriented EVOH film) is laminated to a relatively stiff substrate (for example paperboard, foamed plastics, etc.). We have found that this laminate, when used as a packaging material, has improved gas barrier properties over extrusion-coated barrier material of the same coating weights. A greater variety of, e.g., EVOHs can be employed as films than as extrusion coatings because processes usable in production of films, for example extrusion casting or film blowing, are not so demanding of the EVOH as is the extrusion coating process. We have found that the EVOH film can replace aluminium foil in laminating operations without the need for any modifications to a conventional extrusion laminating line. We have also found that the use of a barrier film instead of aluminium foil permits higher production line speed, because the film has a higher ductility and therefore does not break as easily as aluminium foil.

### BRIEF DESCRIPTION OF DRAWING

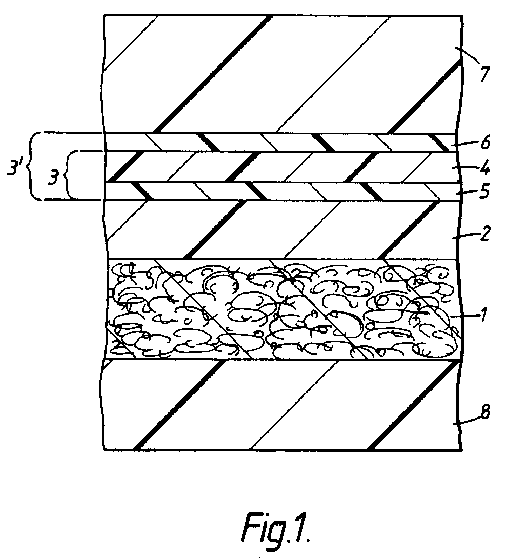

In order that the invention may be clearly understood and readily carried into effect, reference will now be made, by way of example, to the accompanying drawings, in which:-
Figure 1 shows a cross-section illustrating possible laminates of the first and second preferred versions.

### BEST MODE FOR CARRYING OUT THE INVENTION

Referring to Figure 1, the laminate comprises a paperboard substrate 1 onto which has been extrusion-coated an outermost LDPE layer 8 and onto which has been laminated, by way of an intermediate LDPE layer 2, either a barrier film laminate 3 consisting of a stable, oriented, gas barrier layer 4 and an outer tie layer 5, or a barrier film laminate 3' consisting of inner and outer tie layers 6 and 5 and an intermediate, stable, oriented gas barrier layer 4. Onto the film 3 is co-extrusion-coated a tie layer 6 and an innermost LDPE layer 7. Onto the film 3' is extrusion-coated the layer 7. The barrier layer 4 may be the "EXCEED" EVOH film supplied by Okura Industrial Company of Japan, whilst the tie layers 5 and 6 may be of the "BYNEL" (Trade Mark) material supplied by Du Pont de Nemours, the preferred "BYNEL" (Trade Mark) being E388. The layer 7 maybe approximately 30 microns thick, the tie layers 5 and 6 may be 1 to 10 microns thick, for example approximately 3 microns thick, the layer 4 may be 3 to 12 microns thick, for example approximately 6 microns and the layer 2 may be 7 to 20 microns thick, for example approximately 15 microns.

### INDUSTRIAL APPLICABILITY

The present invention is particularly applicable to the packaging field, especially gable-top or flat-top cartons for packaging of liquids.

## Claims

1. A laminating method carried out upon a conventional laminating line usable for aluminum foil, said method comprising extrusion laminating (i) a web (1,8) comprised of a relatively stiff substrate (1) and a first moisture barrier layer (8) at one side of said substrate (1), (ii) a thermoplastics layer (2) and (iii) a prefabricated film (3,3') used in place of said aluminum foil and comprised of a gas-barrier polymer layer (4), by applying said thermoplastics layer in a molten state to between said film (3,3') and that side of said substrate (1) further from said first moisture barrier layer (8), wherein said extrusion laminating is followed by applying a second moisture barrier layer (7) to that side of the film (3,3') further from said substrate (1).

2. A method according to claim 1, wherein said film consists of said polymer layer (4) and a tie layer (5) at that side of said polymer layer (4) nearer said substrate (1).

3. A method according to claim 1, wherein said film (3') consists of said polymer layer (4) and tie layers (6,5) at respective opposite sides of said polymer layer (4).

4. A method according to any preceding claim, wherein said barrier polymer layer (4) is an oriented, gas barrier.

5. A method according to claim 4, wherein said barrier polymer layer (4) is bi-axially oriented ethylene vinyl alchohol.

6. A method according to any preceding claim, wherein said barrier polymer layer (4) is Cellophane®.

7. A method according to any one of claims 1 to 5, wherein said barrier polymer layer (4) is a glass-coated polyethylene terephthalate or glass-coated OPP.

## Patentansprüche

1. Laminierungsverfahren, das auf einer konventionellen, für Aluminiumfolie geeigneten Laminierungsanlage durchgeführt wird, umfassend die Extrusionslaminierung (i) einer Bahn (1,8), die aus einem relativ steifen Substrat (1) und einer ersten Feuchtigkeits-Sperrschicht (8) auf einer Seite des Substrats (1) besteht, (ii) einer thermoplastischen Schicht (2) und (iii) einer vorgefertigten Folie (3,3'), die anstelle der Aluminiumfolie verwendet wird und eine Polymer-Gassperrschicht (4) umfaßt, durch Auftragen der thermoplastischen Schicht in einem geschmolzenen Zustand zwischen die Folie (3,3') und auf die Seite des Substrats (1), die von der ersten Feuchtigkeits-Sperrschicht (8) weiter entfernt ist, worin auf die Extrusionslaminierung das Auftragen einer zweiten Feuchtigkeits-Sperrschicht (7) auf die Seite der Folie (3,3') folgt, die von dem Substrat (1) weiter entfernt ist.

2. Verfahren gemäß Anspruch 1, worin die Folie aus der Polymerschicht (4) und einer Verbindungsschicht (5) auf der Seite der Polymerschicht (4) besteht, die näher zum Substrat (1) vorliegt.

3. Verfahren gemäß Anspruch 1, worin die Folie (3') aus dieser Polymerschicht (4) und den Verbindungsschichten (6,5) an den entsprechenden, gegenüberliegenden Seiten der Polymerschicht (4) besteht.

4. Verfahren gemäß irgendeinem der vorhergehenden Ansprüche, worin die Polymersperrschicht (4) eine orientierte Gassperre ist.

5. Verfahren gemäß Anspruch 4, worin die Polymersperrschicht (4) ein biaxial orientierter Ethylenvinylalkohol ist.

6. Verfahren gemäß irgendeinem der vorhergehenden Ansprüche, worin die Polymersperrschicht (4) Cellophan® ist.

7. Verfahren gemäß irgendeinem der Ansprüche 1 bis 5, worin die Polymersperrschicht (4) ein glasbeschichtetes Polyethylenterephthalat oder ein glasbeschichtetes OPP ist.

## Revendications

1. Un procédé de plaquage mis en oeuvre sur une ligne de plaquage de type traditionnel utilisable pour feuille d'aluminium, ledit procédé comprenant le plaçage par extrusion (i) d'une âme (1, 8) se composant d'un substrat (1) relativement rigide et d'une première couche (8) formant barrière contre l'humidité au niveau d'un côté dudit substrat (1), (ii) d'une couche thermoplastique (2) et (iii) d'un film préfabriqué (3, 3') utilisé à la place de ladite feuille d'aluminium et se composant d'une couche de polymère (4) formant barrière contre les gaz, par application de ladite couche thermoplastique à l'état fondu entre ledit film (3, 3') et le côté dudit substrat (1) plus éloigné de ladite première couche (8) formant barrière contre l'humidité, dans lequel ledit plaquage par extrusion est suivi par l'application d'une seconde couche (7) formant barrière contre l'humidité sur le côté du film (3, 3') plus éloigné dudit substrat (1).

2. Un procédé selon la revendication 1, dans lequel ledit film se compose de ladite couche de polymère (4) et d'une couche de liaison (5) sur le côté de ladite couche polymère (4) plus près dudit substrat (1).

3. Un procédé selon la revendication 1, dans lequel ledit film (3') se compose de ladite couche de polymère (4) et de couches de liaison (6, 5) au niveau de côtés opposés respectifs de ladite couche de polymère (4).

4. Un procédé selon une revendication précédente quelconque, dans lequel ladite couche de polymère formant barrière (4) est une barrière au gaz orientée.

5. Un procédé selon la revendication 4, dans lequel ladite couche de polymère formant barrière (4) est en alcool de vinyle éthylène à orientation biaxiale.

6. Un procédé selon une revendication précédente quelconque, dans lequel ladite couche de polymère formant barrière (4) est en Cellophane®.

7. Un procédé selon une quelconque des revendications 1 à 5, dans lequel ladite couche de polymère formant barrière (4) est en téréphtalate de polyéthylène revêtu de verre ou en PPO revêtu de verre.
